# EUROPÄISCHE PATENTSCHRIFT

(11) **EP 3 405 314 B1**
(45) Veröffentlichungstag und Bekanntmachung des Hinweises auf die Patenterteilung: **14.07.2021**
(21) Anmeldenummer: 17700397.7
(22) Anmeldetag: 09.01.2017
(51) Int. Cl.: B26B 15/00, B23D 29/00, B23D 35/00

(54) **MOTORISCH BETÄTIGBARE SCHERE**
MOTOR-OPERATED SHEARS
CISAILLE À ACTIONNEMENT MOTORISÉ

(30) Priorität: 20.01.2016 DE 102016100940
(43) Veröffentlichungstag der Anmeldung: 28.11.2018
(73) Patentinhaber: Gustav Klauke GmbH, 42855 Remscheid (DE)
(72) Erfinder: LEHR, Andreas, 41468 Neuss (DE)
(74) Vertreter: Müller, Enno
(86) Internationale Anmeldenummer: PCT/EP2017/050332
(87) Internationale Veröffentlichungsnummer: WO 2017/125272

(56) Entgegenhaltungen:
- WO-A1-2006/065113
- GB-A- 2 405 117
- US-A- 4 506 445

## Beschreibung

### Gebiet der Technik

Die Erfindung betrifft eine motorisch betätigbare Schere mit zwei zur scherenden Bewegung relativ zueinander bewegbaren Schneiden.

### Stand der Technik

Derartige Scheren sind bekannt. Es wird bspw. auf die DE 295 07 457 U1 verwiesen. Die dort beschriebene und dargestellte Schere ist hydraulisch betätigbar, wobei der Hydraulikdruck elektrisch aufbaubar ist. Ein mit Hydraulikmittel beaufschlagbarer Kolben wirkt über eine Kolbenstange auf die relativ zueinander bewegbaren Schneiden ein, derart, dass diese aus einer Scheren-Grundstellung in eine Schneidstellung und zurück verlagert werden können. Die beiden Schneiden sind jeweils um gerätefeste Achskörper schwenkbar.

In bekannter Ausgestaltung einer solchen Schere liegen die Schneiden bzw. die die Schneiden bildenden Schneidbacken zumindest über einen Teil ihrer Erstreckung flächig im Bereich einer Schneidebene aneinander an. Weiter bekannt ist diesbezüglich die Schneiden so auszubilden, dass diese im Zuge des Schneidvorganges in der Schneidebene aneinander vorbeigeführt werden.

Beim Schneiden von Schneidgut, wie bspw. Kabelsträngen, kann sich zum Ende des Schneidvorgangs der Effekt einstellen, dass sich ein Teil des Schneidgutes, bspw. ein Teil des Kabelstranges, zwischen die Schneiden klemmt, dies unter Aufspreizen der Schneiden in einer quer zu der Schneidbewegung der Schneiden gegebenen Richtung. Der Schneidvorgang kann ggf. nicht vollständig beendet werden. Auch kann durch einen sich einstellenden Klemmeffekt eine Rückverlagerung der Schneiden in die Scheren-Grundstellung gehindert sein, insbesondere bei einer üblichen Federrückstellung, ggf. bei einer motorisch selbsttätigen Rückstellung.

Aus der US 4,506,445 A ist eine motorisch betätigbare Schere bekannt, bei welcher auf die Schneiden in unterschiedlichen Ebenen, quer zur Schneidebene, mittels Lenkern eingewirkt wird. Hierdurch ist eine besondere Aufeinanderpressung der Schneiden erreicht. Vergleichbares ergibt sich auch aus der WO 2006/065113 A1.

### Zusammenfassung der Erfindung

Ausgehend von dem dargelegten Stand der Technik beschäftigt sich die Erfindung mit der Aufgabenstellung, eine motorisch betätigbare Schere der in Rede stehenden Art funktionssicherer auszugestalten.

Diese Aufgabe ist beim Gegenstand des Anspruches 1 gelöst, wobei darauf abgestellt ist, dass zum Ende der Bewegung durch die Schere selbst auf die Schneiden in einer quer zu der Bewegung gegebenen Richtung zur Distanzierung der Schneiden voneinander in dieser Richtung eingewirkt ist.

Es wird entsprechend zum Ende des Schneidvorgangs hin bewusst in eine quer zur Schneidbewegung, weiter bevorzugt quer zu einer Schneidebene gegebene Richtung auf die Schneiden oder auf die Schneiden aufweisenden Backen eingewirkt, derart, dass sich auf Grund dieser Einwirkung eine Distanzierung der Schneiden ergibt. Mit einer solchermaßen ausgebildeten Schere können zufriedenstellende Schneidergebnisse erreicht werden. Einer Hinderung der Schneiden an einer Rückverlagerung in die Schneid-Grundstellung, insbesondere zufolge Einklemmens von Bereichen des Schneidgutes, ist entgegengewirkt.

Die Einwirkung kann so gegeben sein, dass sich zumindest eine der beiden Schneiden zu der durch beide Schneiden im Schneidvorgang definierten Schneidebene distanziert. Auch können durch die Einwirkung beide Schneiden, ggf. gleichermaßen, zu der Schneidebene distanziert werden.

Die Distanzierung der einen oder der beiden Schneiden zum Ende des Schneidvorganges wird in bevorzugter Ausgestaltung mit Verlagerung der Schneiden in Richtung auf die Scheren-Grundstellung (Schneiden-Öffnungsstellung) wieder aufgehoben, so dass sich diese wieder in einer gemeinsamen Schneidebene aneinander vorbei bewegen können.

Die Rückstellung der einen oder der beiden Schneiden in die gemeinsame Schneidebene kann, wie auch bevorzugt, allein durch Fortfall der entsprechenden Einwirkung auf die Schneiden zur Distanzierung derselben erfolgen.

Weiter kann vorgesehen sein, dass die Schneiden, ausgehend von einer Drehachse der Schneiden, aufspreizend beaufschlagt sind. Die Schneide, insbesondere die sich im Zuge des Schneidvorganges in der Schneidebene erstreckende Schneidfläche kann sich mit Bezug auf einen Schnitt in einer Ebene senkrecht zur Schneidebene, zumindest ausgehend von der Drehachse in Richtung auf ein freies Ende der Schneide, einen spitzen Winkel zu der Schneidebene einschließen. Diesbezüglich kann ein spitzer Winkel von wenigen Winkelgraden vorgesehen sein, so bspw. von 0,5° bis hin zu 3°; weiter bspw. etwa 1,5 - 2°.

Werden beide Schneiden zugleich zum Ende des Schneidvorganges aufspreizend beaufschlagt, so können sich gemäß einer Ausführung, die auch bevorzugt ist, bezüglich der Schneiden gleiche einschließende Winkel zu der Schneidebene einstellen, alternativ aber auch unterschiedliche spitze Winkel.

In alternativer Ausgestaltung sind die Schneiden über ihre quer zur Drehachse betrachteten Länge zur parallelen Distanzierung zueinander wie auch zu der Schneidebene beaufschlagt. Es erfolgt entsprechend hierbei eine Verlagerung zumindest einer Schneide bzw. einer Schneidbacke insgesamt in eine Richtung quer, weiter bevorzugt senkrecht zur Schneidebene. Es können diesbezüglich auch beide Schneidbacken entsprechend beaufschlagt sein, dies bevorzugt in entgegengesetzte, voneinander wegweisende Richtungen.

Auch können die Schneiden überlagert zu einer aufspreizenden Beaufschlagung zur parallelen Distanzierung beaufschlagt sein. Es ergibt sich hierbei zum Ende des Schneidvorganges eine Stellung und Ausrichtung der Schneiden, in welcher zumindest eine Schneide senkrecht zur Schneidebene zu dieser distanziert und mit Bezug auf einen Vertikalschnitt hinsichtlich der Schneidfläche einen spitzen Winkel zu der Schneidebene einschließt.

In einer, wie auch bevorzugten, Ausgestaltung, können die Schneiden auf einem gemeinsamen Achskörper drehbar gelagert sein. Beide Schneiden bewegen sich im Zuge des Schneidvorganges entsprechend drehend um die gemeinsame Drehachse aufeinander zu und in der Schneidebene aneinander vorbei. Der gemeinsame Achskörper kann zur Distanzierung der Schneiden beaufschlagbar sein. Es wird, wie auch bevorzugt, in diesem Fall auf den die Schneiden tragenden Achskörper eingewirkt, um hierüber die Distanzierung durch Aufspreizen und/oder paralleler Distanzierung der Schneiden zu erreichen. Die Einwirkung auf den Achskörper kann, wie bevorzugt, mechanisch erfolgen.

So kann der Achskörper in einer möglichen Ausgestaltung zur Distanzierung der Schneiden elastisch gebogen werden, dies bevorzugt aus einer gestreckten stabförmigen Grundstellung heraus. Die an dem Achskörper geführten Schneiden werden zufolge der Biegung des Achskörpers in Richtung seiner Längserstreckung aufgespreizt.

Durch gegebene elastische Materialeigenschaften ergibt sich eine bevorzugt selbsttätige Rückstellung aus der Biegestellung heraus, nach Fortfall der auf den Achskörper einwirkenden Belastung. Um ein Aufspreizen der Schneiden um bspw. 0,5 - 3° zu der Schneidebene zu erreichen, kann eine Verbiegung des Achskörpers ausreichend sein, bei welcher eine geometrische Achse des Achskörpers (Drehachse) um wenige Zehntel Millimeter bis hin zu 2 mm im Mittenbereich der Achskörper-Längserstreckung verlagert wird, dies bevorzugt bei jeweilig endseitiger Einspannung des Achskörpers an dem Scherengrundkörper. Es ergibt sich so in der Belastungsstellung ein bogenartiger Verlauf der geometrischen Achse des Achskörpers.

Die Schneiden können über einen ausfahrbaren Stößel beaufschlagt sein. Der Stößel kann, wie bevorzugt, ein Teil eines verlagerbaren Kolbens sein oder ein mit dem Kolben verbundener Teil, insbesondere starrer Teil. Darüber hinaus kann der Stößel auch allein motorisch, bspw. elektromotorisch, etwa über einen Spindeltrieb und relativ zu solchen Einspannstellen, verlagerbar sein zur Verlagerung der Schneiden aus einer Scheren-Grundstellung in eine Schneidstellung und zurück. Es kann sich hierbei auch um eine (elektro-)motorische Verlagerung des Stößels, ggf. unter Nutzung eines Hydraulikmediums, welches auf einen den Stößel verlagerbaren Kolben wirkt, handeln.

Der Stößel kann, wie auch bevorzugt, auch zur distanzierenden Einwirkung der Schneiden unmittelbar oder mittelbar auf diese einwirken. So kann der Stößel bspw. auf einen gemeinsamen Achskörper einwirken, derart, dass dieser zum Ende des Schneidvorgangs verbiegt.

Auch kann über den Stößel mittelbar auf die Schneiden eingewirkt werden, bspw. indem zum Ende des Schneidvorganges ein zumindest eine Schneide zu der Schneidebene und/oder zu der anderen Schneide distanzierender Abschnitt in den Bereich der Schneidebene eingeschwenkt wird.

Zudem kann der Stößel in einer möglichen Ausgestaltung auch unmittelbar auf die Schneiden einwirken, um diese zum Ende des Schneidvorganges derart zu beaufschlagen, dass eine Distanzierung, insbesondere parallele Distanzierung der Schneiden zueinander erreichbar ist. So kann der Stößel bspw. keilartig zwischen die Schneiden, in der Schneidebene, treten.

In weiterer, wie auch bevorzugter, Ausgestaltung sind die Schneiden über Lenker von dem Stößel zur scherenden Bewegung angetrieben. Die Lenker können einerends an dem Stößel bzw. an einem Ausleger des Stößels angelenkt sein und anderenends auf einen Lenkerarm einer die Schneide aufweisenden Schneidbacke einwirken. Die Anlenkung an dem Lenkerarm kann, wie auch bevorzugt, quer zur Drehachse der Schneide betrachtet zu dieser beabstandet sein.

Die vor- und nachstehend angegebenen Bereiche bzw. Wertebereiche oder Mehrfachbereiche stießen hinsichtlich der Offenbarung auch sämtliche Zwischenwerte ein, insbesondere in 1/10-Schritten der jeweiligen Dimension, ggf. als auch dimensionslos. Beispielsweise beinhaltet die Angabe 0,5 - 3° auch die Offenbarung von 0,6 - 3°, 0,5 - 2,9°, 0,6 - 2,9° etc., die Offenbarung von 0,5 - 3 mm auch die Offenbarung von 0,6 - 3 mm, 0,5 - 2,9 mm, 0,6 - 2,9 mm, etc. Diese Offenbarung kann einerseits zur Eingrenzung einer genannten Bereichsgrenze von unten und/oder oben, alternativ oder ergänzend aber zur Offenbarung eines oder mehrerer singulärer Werte aus einem jeweilig angegebenen Bereich dienen.

### Kurze Beschreibung der Zeichnungen

Nachstehend ist die Erfindung anhand der beigefügten Zeichnung erläutert, die aber lediglich Ausführungsbeispiele darstellt. Auf der Zeichnung zeigt:
- Fig. 1: eine Schere in perspektivischer Darstellung, eine erste Ausführungsform betreffend;
- Fig. 2: den Bereich der Schneiden der Schere in einer Scheren-Grundstellung;
- Fig. 3: die Seitenansicht gegen die Schere in der Stellung gemäß Fig. 2 bei einer senkrecht zu einer Schnittebene ausgerichteten Zeichenebene;
- Fig. 4: eine Darstellung gemäß Fig. 2, die Scheren-Schließstellung betreffend;
- Fig. 5: eine der Fig. 3 entsprechende Darstellung, betreffend die Stellung gemäß Fig. 4;
- Fig. 6: den Schnitt gemäß der Linie VI-VI in Fig. 5;
- Fig. 7: eine der Fig. 1 entsprechende Darstellung, eine zweite Ausführungsform betreffend;
- Fig. 8: eine der Fig. 2 entsprechende Darstellung, betreffend die Ausführungsform gemäß Fig. 7;
- Fig. 9: die Seitenansicht hierzu;
- Fig. 10: eine der Fig. 8 entsprechende Darstellung, die Scherenschließstellung betreffend;
- Fig. 11: die Seitenansicht hierzu;

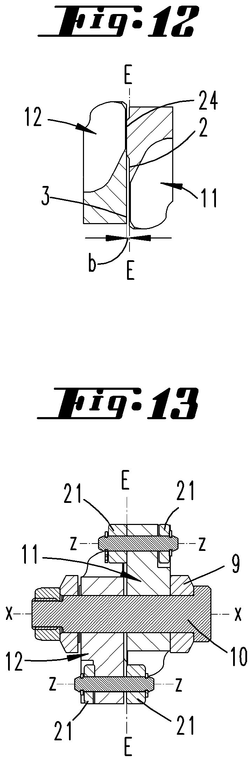

- Fig. 12: den Schnitt gemäß der Linie XII-XII in Fig. 11;
- Fig. 13: den Schnitt gemäß der Linie XIII-XIII in Fig. 11;
- Fig. 14: eine der Fig. 6 entsprechende Schnittdarstellung, eine weitere Ausführungsform betreffend;
- Fig. 15: die Herausvergrößerung des Bereiches XV in Fig. 14;
- Fig. 16: den Schnitt gemäß der Linie XVI-XVI in Fig. 14;
- Fig. 17: eine der Fig. 16 entsprechende Schnittdarstellung, die Scherenschließstellung betreffend.

### Beschreibung der Ausführungsformen

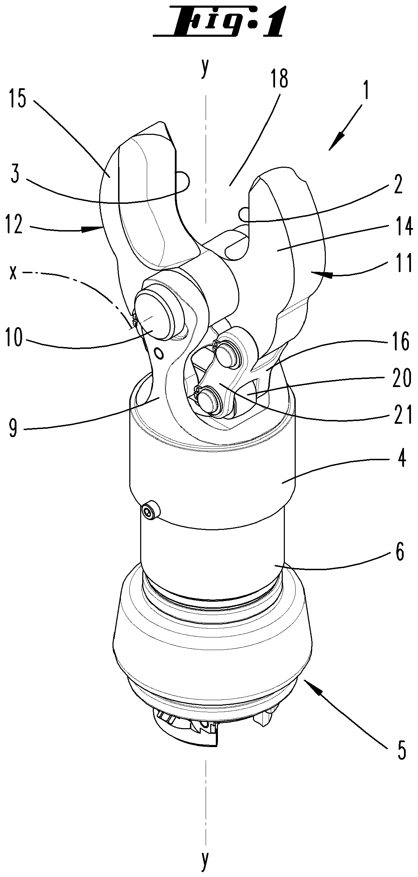

Dargestellt und beschrieben ist, zunächst mit Bezug zu Fig. 1, eine Schere 1 mit zwei zur scherenden Bewegung relativ zueinander bewegbaren, insbesondere schwenkbeweglichen Schneiden 2, 3.

Die Schere 1 kann gemäß den Ausführungsbeispielen, wie auch bevorzugt, als Arbeitskopf eines nicht näher dargestellten Grundgerätes 5 ausgebildet sein. Bei einem solchen Grundgerät kann es sich um ein solches wie bspw. in der WO 2003/084719 A2 (US 7,412,868 B2) dargestelltes und beschriebenes Grundgerät handeln. Bezüglich der Funktions- und Arbeitsweise eines solchen Grundgerätes, insbesondere im Zusammenhang mit einem Arbeitskopf, wie bspw. die Schere 1, wird auf die genannte WO- bzw. US-Schrift verwiesen.

Die Schere 1 ist über einen Flansch 4 mechanisch, wie auch bevorzugt hydraulisch mit dem im Ansatz dargestellten Grundgerät 5 verbunden. Der Flansch 4 ist hierzu zunächst zur Schraubverbindung mit einem Hals 6 des Grundgerätes 5 ausgebildet. Der Hals 6 formt zugleich einen Zylinder 7 für einen Kolben 8 der Schere 1 aus. Der Zusammenwirkungsbereich von Schere 1 und Grundgerät 5 ist im Allgemeinen rotationssymmetrisch zu einer Achse y ausgebildet.

Der Flansch 4 der Schere 1 umfasst den Hals 6 und geht scherenseitig des Halses 6 in einen etwa U-förmigen Halter 9 über. Die U-Öffnung ist abgewandt zu dem Flansch 4 gerichtet.

Im Bereich der freien Enden der parallel zueinander und bevorzugt in Erstreckungsrichtung der Achse y ausgerichteten U-Schenkel ist ein Achskörper 10 gehaltert. Dessen geometrische Achse bildet eine Drehachse x, die quergerichtet verläuft zu der Scherenachse y.

Zwischen den in Erstreckungsrichtung der Drehachse x beabstandeten U-Schenkeln des Halters 9 sind zwei die Schneiden 2 und 3 aufweisende Schneidbacken 11 und 12 auf dem Achskörper 10 und um diesen schwenkbar gehaltert.

In dem in den Figuren 1 - 6 dargestellten ersten Ausführungsbeispiel können, wie auch bevorzugt, die Schneidbacken 11 und 12 nahezu spielfrei zwischen den U-Schenkeln des Halters 9 gefasst sein, so dass einer linearen Verlagerung einer Schneidbacke 11, 12 entlang der Drehachse x entgegengewirkt ist.

Jede Schneidbacke 11 und 12 weist zunächst eine von dem Achskörper 10 durchsetzte Bohrung 13 auf. Von dem Bereich der Bohrung 13 ausgehend erstreckt sich im Wesentlichen von dem Halter 9 abweisend gerichtet ein, die Schneide 2 bzw. 3 aufweisender Schneidarm 14,15. Ausgehend von dem Bereich der Bohrung 13 in Richtung auf den Flansch 4 weisend weist jede Schneidbacke 11 und 12 einen Beaufschlagungsarm 16 bzw. 17 auf.

Die aufeinander zuweisenden Flächen der Schneidbacken 11 und 12 sind insbesondere im Bereich der Schneidarme 14 und 15 eben ausgeformt, dies bei bevorzugter Anlage der Flächen aneinander, so dass im Zuge eines Schneidvorganges die Schneiden 2 und 3 aneinander vorbeigeführt werden können.

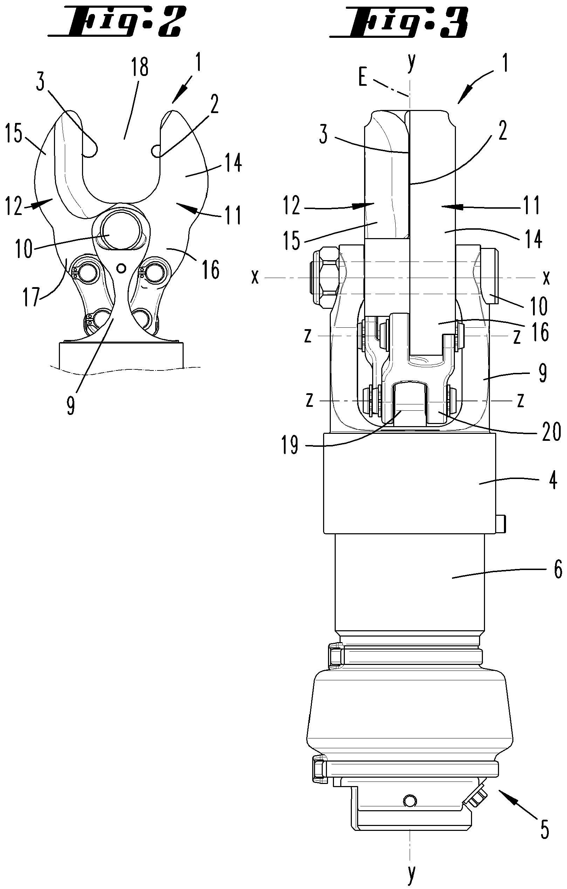

Die in einer Grundstellung gemäß den Figuren 1 - 3 zueinander beabstandeten Schneiden 2 und 3, die in einer wie bspw. in Fig. 2 dargestellten Scheren-Grundstellung eine Schneidöffnung 18 belassen, werden im Zuge eines Schneidvorganges aneinander vorbeigeführt, dies innerhalb einer Schneidebene E.

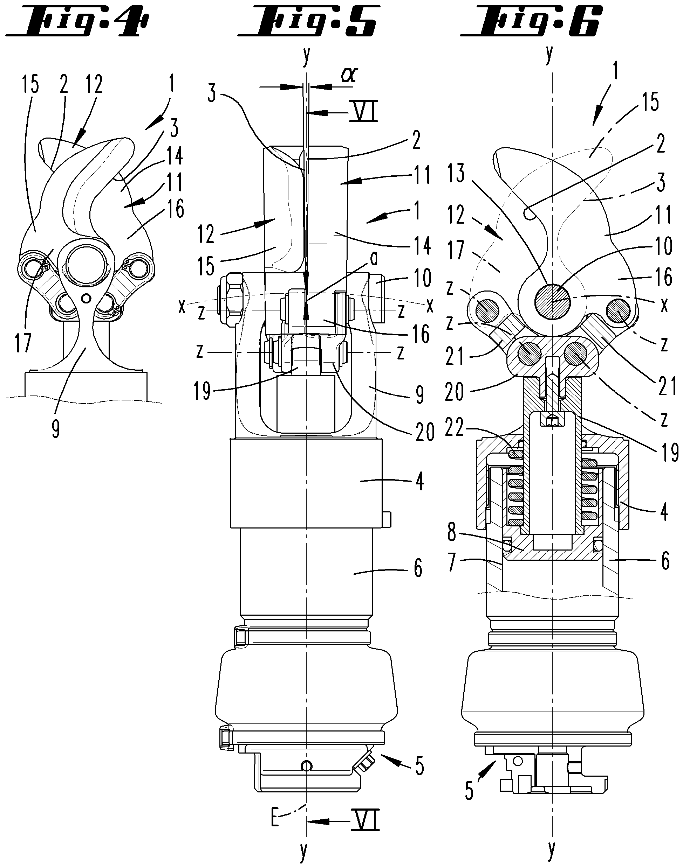

Die Schneidebene E erstreckt sich bevorzugt die Scherenachse y aufnehmend, wobei weiter bevorzugt die Drehachse x senkrecht zu der Schneidebene E ausgerichtet ist. Wie insbesondere aus der Darstellung in Fig. 5 zu erkennen, verläuft die Schneidebene E zwischen den aneinander liegenden Schneidbacken 11,12, bzw. Schneiden 2, 3.

Der Kolben 8 ist mit einem den Flansch 4 in Erstreckungsrichtung der Achse y zentral durchsetzenden Stößel 19 verbunden. Dieser kann endseitig eine oder, wie dargestellt und bevorzugt, zwei starre, im Wesentlichen quer zu einer Verlagerungsrichtung des Kolbens 8 ausgerichtete Laschen 20 tragen.

An den Laschen 20 sind Lenker 21 drehbar gehaltert, deren der Lasche 20 abgewandten Enden gelenkig mit den Beaufschlagungsarmen 16 und 17 der Schneidbacken 11 und 12 zusammenwirken.

Die diesbezüglichen Drehachsen z jeweils endseitig der Lenker 21 erstrecken sich raumparallel zur Drehachse x des Achskörpers 10.

Die Anlenkstellen zwischen Lenker 21 und Beaufschlagungsarm 16,17 sind radial beabstandet zur Drehachse x. Es ergibt sich so ein Hebelarm.

Die Verlagerung der Schneiden 2 und 3 bzw. der Schneidbacken 11 und 12 aus der Scheren-Grundstellung heraus zum Schneiden eines Schneidgutes erfolgt zufolge einer Druckerhöhung im Zylinderraum, insbesondere durch ein Pumpen eines Hydraulikmittels in den Zylinderraum, wodurch der Kolben 8 mit seinem Stößel 19 entgegen der Kraft einer vorgesehenen, den Stößel 19 umgebenden Rückstellfeder 22 linear verlagert wird. Über die Gelenkausbildung (Lasche-Lenker-Beaufschlagungsarm) werden die Schneidbacken 11 und 12 um die Drehachse x aufeinander zu geschwenkt, unter Abgleiten der aufeinander zu gerichteten, die Schneiden 2 und 3 anbietenden Flächen.

Zum Ende des Schneid vorganges kann der Stößel 19 unmittelbar, oder wie dargestellt und auch bevorzugt, mittelbar über die Laschen 20 auf den Achskörper 10 einwirken, derart, dass dieser sich unter weiterer Fassung der Achskörper-Enden an dem Halter 9 biegt. Die diesbezügliche Drehachse x kann unter dieser Beaufschlagung gemäß der Darstellung in Figur 5 betrachtet aus Richtung des Grundgerätes 5 in einem konvexen Bogen verlaufen. Es kann sich unter dieser Belastung ein Versatzmaß a eines Achspunktes, der im Schnittpunkt von Drehachse x und Achse y bzw. Drehachse x und Schneidebene E liegt, gegenüber dem Schnittpunkt in der unbelasteten Stellung von wenigen Zehntel Millimetern, bspw. 0,1 - 0,5 mm bis hin zu bspw. 1 oder 2 mm einstellen.

Die Einwirkung auf den Achskörper 10 kann unmittelbar erfolgen. Dargestellt und auch bevorzugt ist jedoch eine mittelbare Beaufschlagung über das die Bohrung 13 aufweisende Auge der Schneidbacken 11 und 12 (vgl. Fig. 6).

Zufolge der in dieser Belastung entlang eines Bogens verlaufenden Drehachse x und entsprechender Biegung des Achskörpers 10 sind die Schneiden 2 und 3, insbesondere die die Schneiden 2 und 3 aufweisenden Schneidarme 14 und 15 ausgehend von der Drehachse x bzw. ausgehend von dem Achskörper 10 aufgespreizt (vgl. Fig. 5). Der sich hierbei einstellende Winkel α zwischen den aufeinander zuweisenden Schneidflächen kann wenige Zehntel Grad, bspw. 0,5° bis hin zu 2 oder 3° betragen.

Bevorzugt, wenngleich nicht zwingend, können die aufeinander zuweisenden Flächen der Schneidbacken 11 und 12 gleiche spitze Winkel zu der Schneidebene E einschließen.

Mit Abschluss des Schneidvorganges (der in den Figuren 4 und 6 auch dargestellt ist) verfährt der Kolben 8 ggf. selbsttätig, alternativ zufolge Auslösen eines Befehls durch den Anwender, zurück in seine Grundstellung, dies unterstützt durch die Kraft der sich entspannenden Rückstellfeder 22. Mit Einsetzen der Rückverlagerung des Kolbens 8 verliert der Achskörper 10 die stößelseitige Beaufschlagung, woraufhin eine selbsttätige Rückstellung des Achskörpers 10 zufolge der elastischen Eigenschaften des gewählten Materials in eine Stellung erfolgt, in welcher die Drehachse x wieder geradlinig gestreckt und senkrecht zur Schneidebene E ausgerichtet ist. Die Schneidbackenflächen liegen in dieser Stellung wieder bevorzugt aneinander an.

Alternativ oder auch kombinativ zu der vorbeschriebenen Aufspreizung der Schneiden 2 und 3 kann auch eine parallele Distanzierung der Schneiden 2 und 3 zueinander zum Ende des Schneidvorganges gegeben sein.

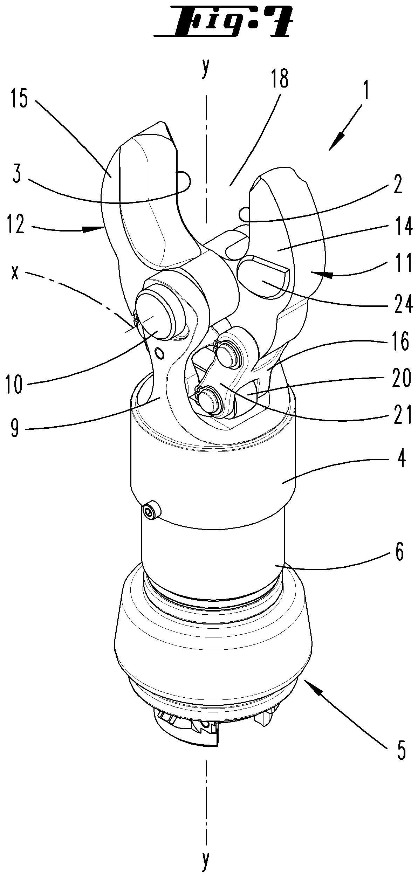

Eine allein sich auf die parallele Distanzierung beziehende beispielhafte Ausführungsform ist in den Figuren 7 - 11 dargestellt.

So können gemäß der Darstellung die Schneidbacken 11 und 12 derart auf dem Achskörper 10 gelagert sein, dass eine geringfügige Verlagerung zumindest einer der Schneidbacken 11, 12 entlang der Drehachse x zwischen den U-Schenkeln des Halters 9 ermöglicht ist, insbesondere eine Verlagerung um wenige Zehntel Millimeter, bspw. 0,5 mm bis hin zu 2 oder auch sogar 3 mm.

Das in Achsrichtung gegebene Spiel ist überbrückt durch Zwischenschaltung einer die eine Schneidbacke 11 gegen die andere Schneidbacke 12 belastende Feder 23. Diese kann den Achskörper 10 umfassend angeordnet sein und sich einerends wandungsinnenseitig an dem zugewandten U-Schenkel des Halters 9 abstützen und andernends auf die zugewandte Fläche des die Bohrung 13 umgebenden Bereiches der Schneidbacke 11 bzw. 12 wirken.

Es kann sich hier bspw. um eine starke Tellerfeder oder auch um einen Sprengring oder dergleichen handeln.

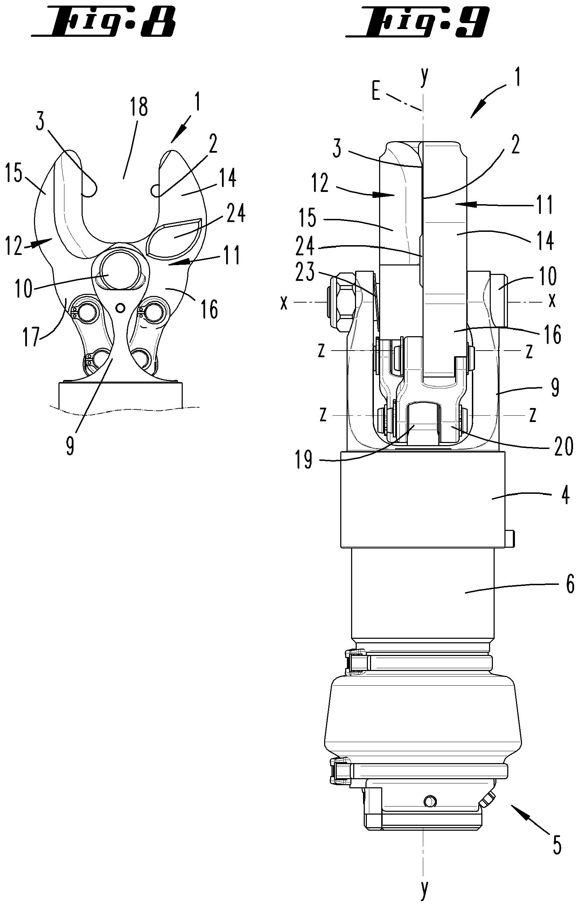

Auf einer der beiden aufeinander zu gerichteten und im Zuge des Schneidvorganges aneinander vorbeigleitenden Flächen der Schneidarme 14 oder 15 kann, wie auch dargestellt und bevorzugt, eine sich von der Fläche ausgehend über die Schneidebene E hinaus erstreckende Erhebung 24 angeformt sein. Diese kann, wie dargestellt, im Grundriss gemäß der Darstellung in Fig. 8 eine Fläche darstellen, mit in Schneidrichtung vorlaufender Auflaufschräge. Auch können diesbezüglich über die Fläche des Schneidarmes 14 oder 15 mehrere, bspw. rippenartig geformte Erhebungen 24 vorgesehen sein.

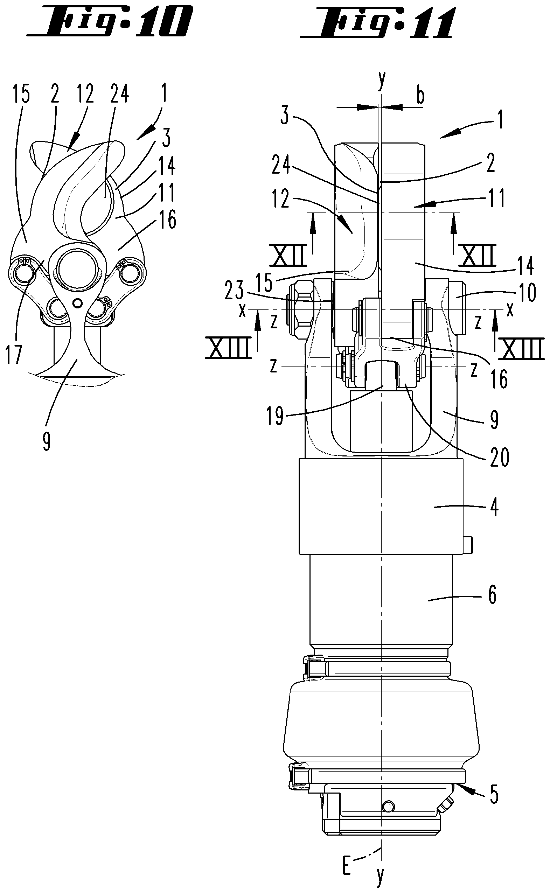

Zum Ende eines Schneidvorganges wird die mit der die Erhebung 24 aufweisenden Schneidbacke zusammenwirkende Schneidbacke zufolge Auflaufen der Schneidfläche auf der Erhebung 24 axial entlang der Drehachse x verlagert und so zu der gegenüberliegenden Schneide distanziert (vgl. Fig. 11). Die axiale Verlagerung erfolgt gegen die Rückstellkraft der Feder 23.

Hierbei kann sich ein Spaltmaß b entsprechend der quer zur Schneidebene E betrachteten Höhe der Erhebung 24 einstellen.

Auch bei dieser Ausführungsform wird im Zuge einer Schneidenrückverlagerung die Belastung der einen Schneidbacke aufgehoben, woraufhin zufolge Entspannung der Feder 23 die Schneidbacke 11 in ihre Grundstellung zurückverlagert wird, in welcher sich beide Schneiden 2 und 3 in der Schneidebene E kreuzen.

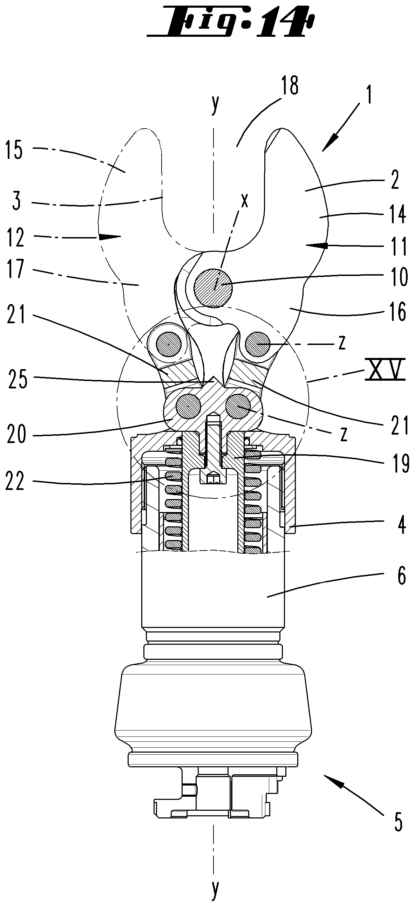

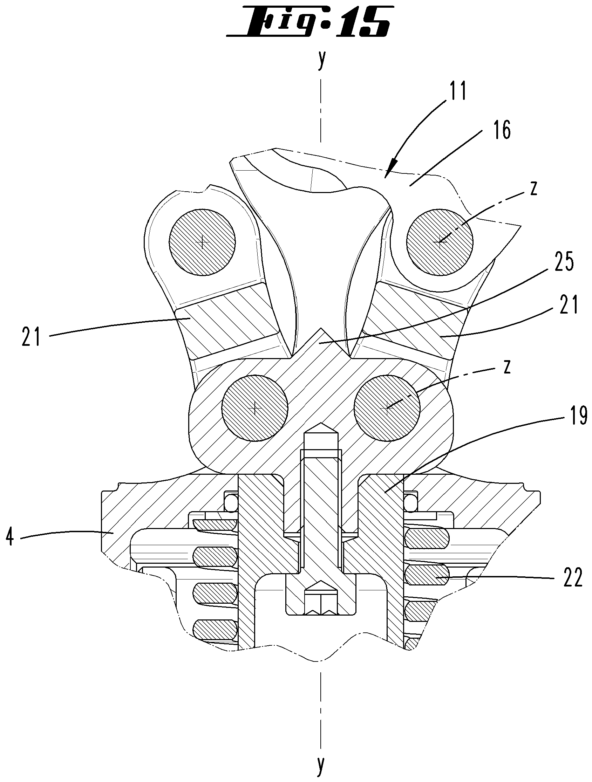

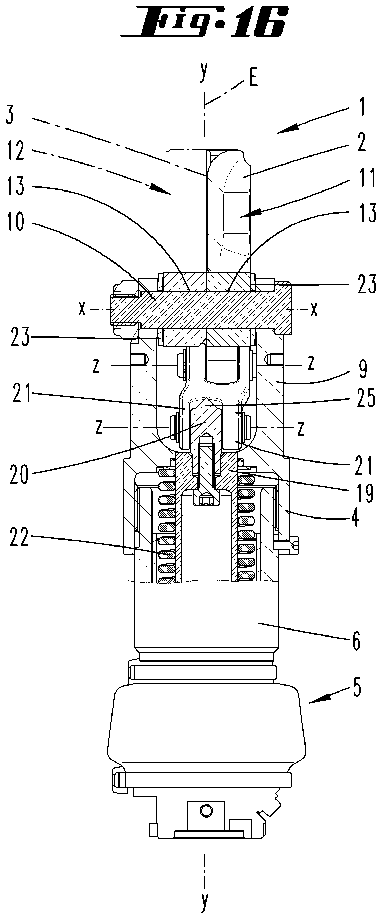

Die Figuren 14 bis 17 zeigen eine weitere Ausführungsform, bei welcher beide Schneidbacken 11, 12 in der Schneidendposition parallel zueinander distanziert sind, zufolge Verlagerung derselben aus der Schneidebene E heraus entlang des Achskörpers 10.

Dies kann, wie auch dargestellt, erreicht sein durch eine unmittelbare Beaufschlagung der Schneiden 2, 3 bzw. Schneidbacken 11, 12 durch den Stößel 19 bzw. durch die an dem Stößel 19 befestigte Lasche 20. Letztere besitzt hierzu einen bevorzugt koaxial zu der Achse y über die Lasche 20 frei hinausgehenden Fortsatz 25. Bevorzugt ist dieser Fortsatz 25 spitzkegelig ausgebildet. Durch die gewählte Anordnung erstreckt sich die Spitze des Fortsatzes 25 in der Schneidebene E.

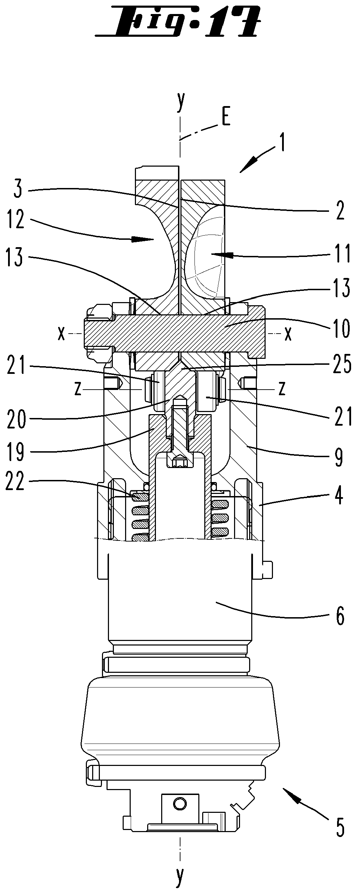

Zum Ende des Schneidvorganges tritt der Spitzenbereich des Fortsatzes in der Schneidebene E gegen aufeinander zugewandte Randkanten der Schneidbacken 11 und 12. Diese korrespondierenden Randkantenbereiche können angepasst an die Steigung der Fortsatz-Kegelfläche gefast sein (siehe Fig. 17).

Durch die axiale Verlagerung des laschenseitigen Fortsatzes 25 werden die Schneiden 2,3 bzw. Schneidbacken 11, 12 in entgegengesetzte Richtungen gedrängt, dies entgegen der Kraft der die Rückstellung der Schneidbacken 11, 12 in die Anlagestellung bewirkenden Feder 23 zwischen Schneidbacke 11, 12 und Halter 9. Der Fortsatz 25 wirkt keilartig auf die Schneidbacken 11 und 12 ein, dies bevorzugt gleichmäßig.

Durch Anordnung eines solchen Fortsatzes 25 kann auch nur eine Schneidbacke 11 oder 12 verlagert werden, während die andere Schneidbacke hinsichtlich ihrer Ausrichtung in Erstreckungsrichtung der Drehachse in der Anlagestellung nicht verrückbar gehalten ist.

Bevorzugt erstrecken sich die aufeinander zu gerichteten Flächen der Schneidbacken 11 und 12 stets parallel zueinander.

Die vorstehenden Ausführungen dienen der Erläuterung der von der Anmeldung insgesamt erfassten Erfindung, die durch die nachfolgenden Ansprüche festgelegt wird, wobei die Bezugszeichen in den Ansprüchen keine einschränkende Wirkung auf die beanspruchten technischen Merkmale haben.

### Liste der Bezugszeichen

| | | | |
|---|---|---|---|
| 1 | Schere | b | Spaltmaß |
| 2 | Schneide | x | Drehachse |
| 3 | Schneide | y | Achse |
| 4 | Flansch | z | Drehachse |
| 5 | Grundgerät | | |
| 6 | Hals | E | Schneidebene |
| 7 | Zylinder | | |
| 8 | Kolben | α | Winkel |
| 9 | Halter | | |
| 10 | Achskörper | | |
| 11 | Schneidbacke | | |
| 12 | Schneidbacke | | |
| 13 | Bohrung | | |
| 14 | Schneidarm | | |
| 15 | Schneidarm | | |
| 16 | Beaufschlagungsarm | | |
| 17 | Beaufschlagungsarm | | |
| 18 | Schneid öffnung | | |
| 19 | Stößel | | |
| 20 | Lasche | | |
| 21 | Lenker | | |
| 22 | Rückstellfeder | | |
| 23 | Feder | | |
| 24 | Erhebung | | |
| 25 | Fortsatz | | |
| | | | |
| a | Versatzmaß | | |

## Patentansprüche

1. Motorisch betätigbare Schere (1) mit zwei zur scherenden Bewegung relativ zueinander bewegbaren Schneiden (2, 3), **dadurch gekennzeichnet, dass** zum Ende der Bewegung durch die Schere selbst auf die Schneiden (2, 3) in einer quer zu der Bewegung gegebenen Richtung zur Distanzierung der Schneiden (2, 3) voneinander in dieser Richtung eingewirkt ist.

2. Schere nach Anspruch 1, **dadurch gekennzeichnet, dass** die Schneiden (2, 3) ausgehend von einer Drehachse (x) der Schneiden (2, 3), aufspreizend beaufschlagt sind.

3. Schere nach einem der vorhergehenden Ansprüche, **dadurch gekennzeichnet, dass** die Schneiden (2, 3) über ihre Länge zur parallelen Distanzierung beaufschlagt sind.

4. Schere nach Anspruch 3, **dadurch gekennzeichnet, dass** auf einer der beiden aufeinander zu gerichteten und im Zuge des Schneidvorgangs aneinander vorbei gleitenden Flächen der Schneidarme (14, 15) eine sich von der Fläche ausgehend über die Schneidebene (E) hinaus erstreckende Erhebung (24) angeformt ist, wobei weiter zum Ende eines Schneidvorganges die mit der Erhebung (24) aufweisende Schneidbacke zusammenwirkende Schneidbacke zufolge Auflaufen der Schneidfläche auf die Erhebung (24) axial entlang der Drehachse (x) verlagert und so zu einer gegenüberliegenden Schneide distanziert wird, gegen die Rückstellkraft einer Feder (23).

5. Schere nach einem der vorhergehenden Ansprüche, **dadurch gekennzeichnet, dass** die Schneiden (2, 3) überlagert zu einer aufspreizenden Beaufschlagung zur parallelen Distanzierung beaufschlagt sind.

6. Schere nach einem der vorhergehenden Ansprüche, **dadurch gekennzeichnet, dass** die Schneiden (2, 3) auf einem gemeinsamen Achskörper (10) drehbar gelagert sind und dass der Achskörper (10) zur Distanzierung der Schneiden (2, 3) beaufschlagt ist.

7. Schere nach Anspruch 6, **dadurch gekennzeichnet, dass** der Achskörper (10) zur Distanzierung der Schneiden (2, 3) verbiegbar ist.

8. Schere nach einem der vorhergehenden Ansprüche, **dadurch gekennzeichnet, dass** die Schneiden (2, 3) über einen motorisch, ggf. unter Nutzung eines Hydraulikmediums, ausfahrbaren Stößel (19) beaufschlagt sind.

9. Schere nach einem der Ansprüche 6 bis 8, **dadurch gekennzeichnet, dass** der Stößel (19) zur Einwirkung auf den Achskörper (10) ausgebildet ist.

10. Schere nach einem der Ansprüche 8 oder 9, **dadurch gekennzeichnet, dass** der Stößel (19) zur unmittelbaren Einwirkung auf die Schneiden (2, 3) ausgebildet ist.

11. Schere nach einem der Ansprüche 8 bis 10, **dadurch gekennzeichnet, dass** die Schneiden (2, 3) über Lenker (21) von dem Stößel (19) zur scherenden Bewegung angetrieben sind.

## Claims

1. Motor-operated shears (1) with two blades (2, 3) that can be moved relative to one another in order to carry out a shearing movement, **characterized in that** the blades (2, 3) are toward the end of the movement acted upon by the shears themselves in a direction extending transversely to the movement in order to space the blades (2, 3) apart from one another in this direction.

2. The shears according to claim 1, **characterized in that** the blades (2, 3) are acted upon so as to be spread apart starting from a rotational axis (x) of the blades (2, 3).

3. The shears according to one of the preceding claims, **characterized in that** the blades (2, 3) are acted upon over their length in order to be spaced apart in a parallel manner.

4. The shears according to claim 3, **characterized in that** an elevation (24) is integrally formed on one of the two facing surfaces of the cutting arms (14, 15) that slide past one another during the course of a cutting process, wherein said elevation extends from the surface beyond the cutting plane (E), and wherein the cutting jaw that interacts with the cutting jaw featuring the elevation (24) is toward the end of a cutting process axially displaced along the rotational axis (x) against the restoring force of the spring (23) and therefore spaced apart from the opposite blade as a result of the cutting surface running up on the elevation (24).

5. The shears according to one of the preceding claims, **characterized in that** the blades (2, 3) are acted upon in a superimposed manner in order to be spread and spaced apart parallel to one another.

6. The shears according to one of the preceding claims, **characterized in that** the blades (2, 3) are rotatably mounted on a common axle body (10), and **in that** the axle body (10) is acted upon in order to space apart the blades (2, 3).

7. The shears according to claim 6, **characterized in that** the axle body (10) can be bent in order to space apart the blades (2, 3).

8. The shears according to one of the preceding claims, **characterized in that** the blades (2, 3) are acted upon by means of a plunger (19) that can be extended in a motor-driven manner, if applicable with the aid of a hydraulic medium.

9. The shears according to one of claims 6 to 8, **characterized in that** the plunger (19) is designed for acting upon the axle body (10).

10. The shears according to one of claims 8 or 9, **characterized in that** the plunger (19) is designed for directly acting upon the blades (2, 3).

11. The shears according to one of claims 8 to 10, **characterized in that** the blades (2, 3) are driven by the plunger (19) via connecting rods (21) in order to carry out a shearing movement.

## Revendications

1. Cisaille motorisée (1) avec deux lames (2, 3) mobiles l'une par rapport à l'autre pour le mouvement de cisaillement, **caractérisée en ce que**, à la fin du mouvement, la cisaille elle-même agit sur les lames (2, 3) dans une direction transversale au mouvement pour l'espacement des lames (2, 3) l'une de l'autre dans cette direction.

2. Cisaille selon la revendication 1, **caractérisée en ce que** les lames (2, 3) sont sollicitées de manière à s'écarter à partir d'un axe de rotation (x) des lames (2, 3).

3. Cisaille selon l'une des revendications précédentes, **caractérisée en ce que** les lames (2, 3) sont sollicitées sur leur longueur pour l'espacement parallèle.

4. Cisaille selon la revendication 3, **caractérisée en ce qu'**est formée sur l'une des deux surfaces des bras de coupe (14, 15) qui sont dirigées l'une vers l'autre et glissent l'une sur l'autre au cours de l'opération de coupe, une saillie (24) s'étendant depuis la surface au-dessus du plan de coupe (E), dans laquelle en outre, vers la fin d'une opération de coupe, la mâchoire de coupe coopérant avec la mâchoire de coupe présentant la saillie (24) est déplacée axialement le long de l'axe de rotation (x) du fait du passage de la surface de coupe sur la saillie (24) et est ainsi espacée d'une lame opposée contre la force de rappel d'un ressort (23).

5. Cisaille selon l'une des revendications précédentes, **caractérisée en ce que** les lames (2, 3) sont sollicitées en superposition pour être sollicitées en écartement aux fins de l'espacement parallèle.

6. Cisaille selon l'une des revendications précédentes, **caractérisée en ce que** les lames (2, 3) sont montées rotatives sur un corps d'axe commun (10) et **en ce que** le corps d'axe (10) est sollicité pour écarter les lames (2, 3).

7. Cisaille selon la revendication 6, **caractérisée en ce que** le corps de l'axe (10) est pliable pour espacer les lames (2, 3).

8. Cisaille selon l'une des revendications précédentes, **caractérisée en ce que** les lames (2, 3) sont sollicitées par un poussoir (19) qui peut être sorti de manière motorisée le cas échéant en utilisant un fluide hydraulique.

9. Cisaille selon l'une des revendications 6 à 8, **caractérisée en ce que** le poussoir (19) est conçu pour agir sur le corps d'axe (10).

10. Cisaille selon l'une des revendications 8 ou 9, **caractérisée en ce que** le poussoir (19) est conçu pour agir directement sur les lames (2, 3).

11. Cisaille selon l'une des revendications 8 à 10, **caractérisée en ce que** les lames (2, 3) sont entraînées par le poussoir (19) en mouvement de cisaillement par l'intermédiaire de biellettes (21).
